# EUROPÄISCHE PATENTSCHRIFT

(11) **EP 0 712 174 B1**
(45) Veröffentlichungstag und Bekanntmachung des Hinweises auf die Patenterteilung: **07.01.1999**
(21) Anmeldenummer: 95116939.0
(22) Anmeldetag: 27.10.1995
(51) Int. Cl.: H01M 4/52, H01M 4/50, C01G 53/04, C01G 45/02, C01G 53/00, H01M 4/48

(54) **Mangan(III)-haltige Nickel(II)-hydroxid-Pulver, Verfahren zu ihrer Herstellung sowie deren Verwendung**
Manganese(III)-containing nickel-(II) hydroxide, its preparation, and its use in batteries
Hydroxide de nickel(II) contenant du Mn(III), sa préparation et son utilisation dans des batteries

(30) Priorität: 09.11.1994 DE 4439989
(43) Veröffentlichungstag der Anmeldung: 15.05.1996
(73) Patentinhaber: H.C. Starck GmbH & Co. KG, 38642 Goslar (DE)
(72) Erfinder: Axmann, Peter, D-37085 Göttingen (DE)
(74) Vertreter: Steiling, Lothar, Dr.

(56) Entgegenhaltungen:
- EP-A- 0 523 284
- EP-A- 0 633 223
- WO-A-94/19939
- CHEMICAL ABSTRACTS, vol. 123, no. 10, 4.September 1995 Columbus, Ohio, US; abstract no. 118406, XP002009554 & MATER. RES. SOC. SYMP. PROC., 369 (SOLID STATE IONICS IV) 81-6, 1995, GUERLOU-DEMOURGES, L.; DELMAS, C.: "Crystal Chemistry and electrochemical behavior of new manganese substituted nickel hydroxides"
- CHEMICAL ABSTRACTS, vol. 105, no. 22, 1.Dezember 1986 Columbus, Ohio, US; abstract no. 199071, XP002009561 & ELECTROCHIM. ACTA, Bd. 31, Nr. 10, 1986, Seiten 1321-32, CORDOBA, S.I., CARBONIO, R. E., LOPEZ TEIJELO, M., MACAGNO, V.A..: "The electrochemical response of binary mixtures of hydrous transition metal hydroxides coprecipitated on conducting substrates with reference to the oxygen evolution reaction"
- CHEMICAL ABSTRACTS, vol. 108, no. 4, 25.Januar 1988 Columbus, Ohio, US; abstract no. 28486, XP002009562 & ELECTROCHIM. ACTA, Bd. 32, Nr. 12, 1987, Seiten 1783-1786, CORDOBA, S.I., LOPEZ TEIJELO, M., MACAGNO, V.A.: "Voltammetric behavior of ternary mixtures of nickel, manganese and iron hydroxides in relation to the oxygen evolution reaction"

## Beschreibung

Die vorliegende Erfindung betrifft Mangan-haltige Nickel(II)-hydroxid-Pulver, wobei mindestens 50 Mol-% des Mangans in der 3-wertigen Oxidationsstufe vorliegen, Verfahren zu ihrer Herstellung sowie deren Venvendung.

Nickel(II)-hydroxid wird in alkalischen Akkumulatoren als positive Elektrodenmasse verwendet. Veränderungen bestimmter elektrochemischer Eigenschaften können durch den Einbau verschiedener Fremdionen erreicht werden.

Der Einbau von Manganionen ist in Power Sources 1966, Pergamon Press, Seiten 239 ff. beschrieben. Die Dotierung mit Mangan(II)-Ionen führt dabei zu einem Produkt mit β-Ni(OH)₂-Struktur, die Oxidation mit Wasserstoffperoxid zu Mangan(IV) amorphen Produkten.

Praktische Folgerungen sind jedoch aus dem genannten Schrifttum im Hinblick auf die Verbesserung der Eigenschaften und/oder Verwendung dieser Materialien in Sekundärbatterien nicht herzuleiten.

Ein für den Einsatz als positive Elektrodenmasse geeignetes Mangan-dotiertes Nickelhydroxid ist aus der älteren deutschen Patentanmeldung P 43 23 007.5 und der EP-A 633 223 bekannt. Es handelt sich hierbei um ein 3-wertiges Mangan enthaltendes Nickelhydroxid mit Pyroaurit-Struktur. Es zeichnet sich im Vergleich zu undotiertem Nickelhydroxid durch eine erhöhte Zyklenstabilität und verbesserte Ausnutzung des Nickel-Anteils aus. Es erfordert jedoch einen relativ langen elektrochemischen Formierungsprozeß.

Aufgabe dieser Erfindung ist die Bereitstellung eines Mangan(III)-dotierten Nickelhydroxids, welches herausragende elektrochemische Eigenschaften aufweist.

Es wurde überraschendenveise gefunden, daß ein teilweiser Ersatz des dreiwertigen Mangans in der Nickelhydroxidmatrix durch andere 3-wertige Kationen zum schnelleren Erreichen hoher Kapazitäten führt.

Gegenstand dieser Erfindung sind somit Mangan-haltige Nickel(II)-hydroxid-Pulver, wobei mindestens 50 Mol-% des Mangans in der 3-wertigen Oxidationsstufe vorliegen, welche dadurch gekennzeichnet sind, daß 5 bis 60 Mol-% des in der 3-wertigen Oxidationsstufe vorliegenden Mangans durch eines oder mehrere der in der 3-wertigen Oxidationsstufe vorliegenden Elemente Aluminium, Gallium, Indium, Eisen, Chrom und Seltenerdeelemente ersetzt sind.

Die erfindungsgemäßen Nickel(II)-hydroxid-Pulver ermöglichen weiterhin eine Anhebung des Arbeitspotentials bei der Entladung. Als besonders positiv ist darüberhinaus die Steigerung der elektrochemischen Nutzbarkeit zu vermerken.

Durch den teilweisen Ersatz des 3-wertigen Mangans werden nun Entladekapazitäten erreicht, die die Ausnutzung des theoretischen Einelektronenschritts für Nickel übertreffen können.

Bevorzugt sind bei den erfindungsgemäßen Nickel(II)-hydroxid-Pulvern 10 bis 50 Mol-% des Mangans durch die in der 3-wertigen Oxidationsstufe vorliegenden Elemente ersetzt. Besonders gute Ergebnisse werden erzielt, wenn mindestens 80 Mol-%, bevorzugt mindestens 90 Mol-%, in der 3-wertigen Oxidationsstufe vorliegen, wobei jeweils 5 bis 60 Mol-% durch die vorgenannten in der 3-wertigen Oxidationsstufe vorliegenden Elemente ersetzt sind.

Das Mol-Verhältnis von Ni zu Mn einschließlich der obengenannten 3-wertigen Elemente liegt im Bereich von 100 zu 1 bis 3 zu 1, besonders bevorzugt 5 zu 1 bis 3 zu 1.

Für den Fall, daß das erfindungsgemäße Nickelhydroxid weitere Dotierungselemente enthalten soll, wie es teilweise an Nickel hydroxid für die Herstellung von Batterien gefordert wird, kann es bevorzugt eines oder mehrere der in der 2-wertigen Oxidationsstufe vorliegenden Elemente aus der Gruppe Cd, Co, Zn, Ca und Mg in einer Höchstgesamtmenge von 8 Mol-%, bezogen auf die Gesamtmenge von Nickel und Mangan enthalten.

Bevorzugt weisen die erfindungsgemäßen Nickel(II)-hydroxid-Pulver Partikelgrößen von 1 bis 100 µm auf.

Gegenstand dieser Erfindung ist auch ein Verfahren zur Herstellung der erfindungsgemäßen Mangan(III)-haltigen Nickel(II)-hydroxid-Pulver. Dieses wird durchgeführt, indem Lösungen von Nickel(II)-, Mangan(III)- und den in der 3-wertigen Oxidationsstufe vorliegenden Elementen mit Alkalilaugen kopräzipiert werden. Dabei können als Alkalilaugen NaOH und/oder KOH eingesetzt werden, wobei bei weiterer Anwesenheit von Ammoniak sphärische Produkte erhalten werden.

In einer bevorzugten Ausführungsform wird die Mangan(III)-Salzlösung durch Vereinigung von Mangan(II)-Salzlösung mit entsprechenden Mengen Permanganat-, Peroxodisulfat- oder H₂O₂-Lösung hergestellt. Das III-wertige Mangan kann dabei durch Komproportionierung von Permanganat- und Mangan(II)-Lösungen hergestellt werden. Bevorzugt enthält dabei die Mangan(II)-Salzlösung und/oder die Permanganat-Lösung Nickel(II)-Salze.

Die Mangan(III)-Salzlösung enthält dabei stabilisierende Anionen. Als solche eignen sich insbesondere Sulfate und Phosphate.

Die Kopräzipitation kann zur Herstellung zusätzlich dotierter Nickelhydroxide in Gegenwart von löslichen Salzen von in der 2-wertigen Oxidationsstufe vorliegenden Elementen aus der Gruppe Co, Zn, Cd, Ca und Mg durchgeführt werden.

Das erfindungsgemäße Mangan(III)-haltige Nickelhydroxid-Pulver eignet sich hervorragend als Elektrodenmaterial in Sekundärbatterien. Diese Verwendung ist somit auch Gegenstand dieser Erfindung.

Im folgenden wird die Erfindung am Beispiel des Austausches von Mn(III) gegen Al(III) erläutert, ohne daß hierin eine Einschränkung zu sehen ist.

### Beispiele 1 bis 5

### Teilweiser Ersatz von Mn(III) durch Al(III) im System Ni₄MnₓAl₁₋ₓ

### Durchführung des Verfahrens

Die Lösungen A und B wurden jeweils mit Hilfe separater Pumpen bei gleichem Volumendurchsatz (100 ml/h) kontinuierlich über eine Mischkammer vereinigt. Nach einer Gesamtreaktionszeit von 20 sec. tropfte die Lösung in eine Vorlage von KOH, deren pH-Wert mit Hilfe einer Glaselektrode kontrolliert und über Zugabe einer Korrekturlauge (KOH 3,5 m) konstant gehalten wurde (pH = 12,50). Das jeweilige Produkt wurde nach 15 h Alterung abzentrifugiert und 5-mal mit je 650 ml Lauge vom pH 12,50 gewaschen, anschließend im Vakuum bei 51°C drei Tage lang getrocknet.

Die Produkte zeigten ein charakteristisches Röntgenspektrum.
1. "Ni₄Mn₁Al₀"

| | | |
|---|---|---|
| Lösung A | NiSO₄·6H₂O | 26,28 g |
| | MnSO₄·H₂O | 3,380 g |
| | Al₂(SO₄)₃·18H₂O | 0,000 g |
| | 12,5 g H₂SO₄ | |
| | 10,0 g H₃PO₄ | |
| | H₂O ad 125 ml | |

| | | |
|---|---|---|
| Lösung B | KMnO₄ | 0,7904 g |
| | 12,5 g H₂SO₄ | |
| | 10,0 g H₃PO₄ | |
| | H₂O ad 125 ml | |

2. "Ni₄Mn_{0,75}Al_{0,25}"

| | | |
|---|---|---|
| Lösung A | NiSO₄·6H₂O | 26,28 g |
| | MnSO₄·H₂O | 2,535 g |
| | Al₂(SO₄)₃·18H₂O | 2,083 g |
| | 12,5 g H₂SO₄ | |
| | 10,0 g H₃PO₄ | |
| | H₂O ad 125 ml | |

| | | |
|---|---|---|
| Lösung B | KMnO₄ | 0,5925 g |
| | 12,5 g H₂SO₄ | |
| | 10,0 g H₃PO₄ | |
| | H₂O ad 125 ml | |

3. "Ni₄Mn_{0,5}Al_{0,5}"

| | | |
|---|---|---|
| Lösung A | NiSO₄·6H₂O | 26,28 g |
| | MnSO₄·H₂O | 1,690 g |
| | Al₂(SO₄)₃·18H₂O | 4,163 g |
| | 12,5 g H₂SO₄ | |
| | 10,0 g H₃PO₄ | |
| | H₂O ad 125 ml | |

| | | |
|---|---|---|
| Lösung B | KMnO₄ | 0,395 g |
| | 12,5 g H₂SO₄ | |
| | 10,0 g H₃PO₄ | |
| | H₂O ad 125 ml | |

4. "Ni₄Mn_{0,25}Al_{0,75}"

| | | |
|---|---|---|
| Lösung A | NiSO₄·6H₂O | 26,28 g |
| | MnSO₄·H₂O | 0,845 g |
| | Al₂(SO₄)₃·18H₂O | 6,25 g |
| | 12,5 g H₂SO₄ | |
| | 10,0 g H₃PO₄ | |
| | H₂O ad 125 ml | |

| | | |
|---|---|---|
| Lösung B | KMnO₄ | 0,1978 g |
| | 12,5 g H₂SO₄ | |
| | 10,0 g H₃PO₄ | |
| | H₂O ad 125 ml | |

5. "Ni₄Mn₀Al₁"

| | | |
|---|---|---|
| Lösung A | NiSO₄·6H₂O | 26,28 g |
| | MnSO₄·H₂O | 0,000 g |
| | Al₂(SO₄)₃·18H₂O | 8,330 g |
| | 12,5 g H₂SO₄ | |
| | 10,0 g H₃PO₄ | |
| | H₂O ad 125 ml | |

| | | |
|---|---|---|
| Lösung B | KMnO₄ | 0,00 g |
| | 12,5 g H₂SO₄ | |
| | 10,0 g H₃PO₄ | |
| | H₂O ad 125 ml | |

### Analysenergebnisse:

| "X" = in Ni₄Mn₁₋ₓAlₓ | Gewichtsanteile [%] | | | Molverhältnisse [%] | | |
|---|---|---|---|---|---|---|
| | Ni | Mn | Al | Ni | Mn | Al |
| 0,00 | 45,45 | 9,73 | 0 | 81,3 | 18,7 | 0 |
| 0,25 | 42,28 | 6,97 | 1,93 | 78,4 | 13,8 | 7,8 |
| 0,50 | 43,67 | 5,95 | 3,77 | 75,0 | 10,9 | 14,1 |
| 0,75 | 44,36 | 2,42 | 5,977 | 74,0 | 4,3 | 21,7 |
| 1,00 | 43,99 | 0 | 7,47 | 73,1 | 0 | 26,9 |

### Elektrochemische Untersuchungen

### Zyklisierung:

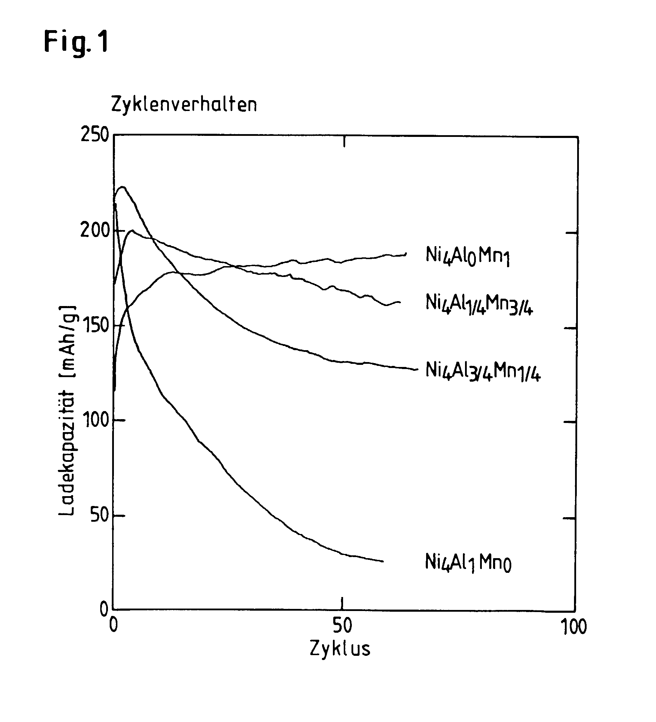

Fig. 1 zeigt das Zyklenverhalten der obigen Materialien.
Die rein mangandotierte Elektrode (Ni₄Mn₁Al₀) beginnt mit Kapazitäten um 120 mAh/g und steigt dann innerhalb von 10 Zyklen auf 170 mAh/g an. Der weitere Anstieg verläuft konstant, aber mit geringer Steigerung.

Ein 25%iger Ersatz des Mn(III) durch Al(III) führt bei der entsprechenden Elektrode schon im ersten Zyklus zu einer Kapazität von 170 mAh/g, der dann im weiteren Verlauf auf 200 mAh/g als Maximalwert ansteigt.

Bei 75%igem Austausch des Mn(III) gegen Al(III) erhält man eine Anfangskapazität um 220 mAh/g mit einem Maximalwert von 225 mAh/g. Diese Ladekapazität überschreitet deutlich den theoretischen Einelektronenschritt für Nickel.

### Potentialverläufe:

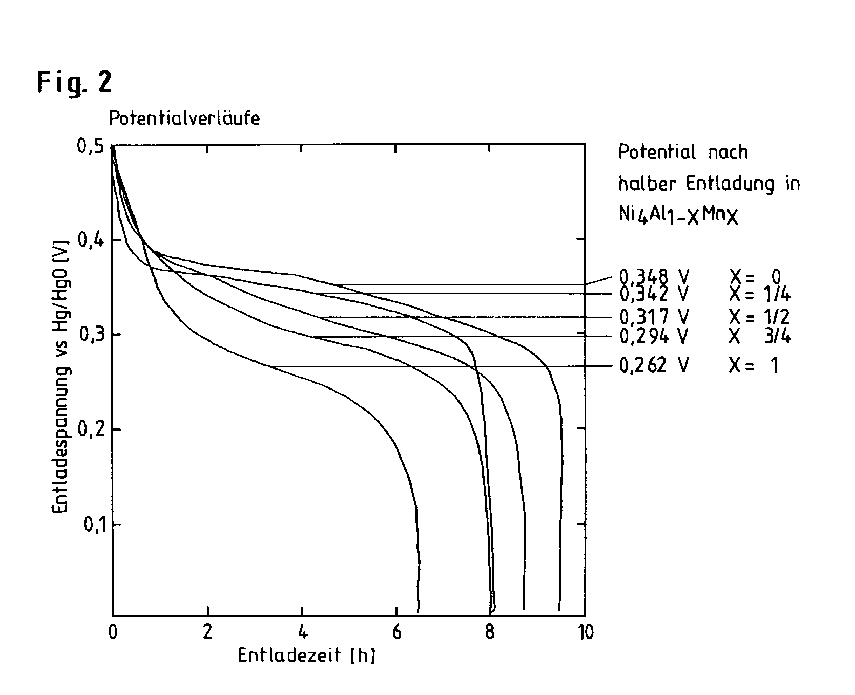

In Abb. 2 sind die Entlade-Charakteristiken für den ersten Zyklus der in Beispielen aufgeführten Elektroden gezeigt.

Durch zunehmenden Ersatz des Mn(III) durch Al(III) läßt sich das mittlere Entladepotential der Mn(III)-dotierten Nickelhydroxidelektrode anheben.

Vorteilhaft hieran ist, daß mit dem gesteigerten Potential auch der nutzbare Energieinhalt der Elektrode ansteigt.

## Patentansprüche

1. Mangan-haltige Nickel(ll)-hydroxid-Pulver mit einem Molverhältnis Nickel zu Mangan von 100:1 bis 3:1, wobei mindestens 50 Mol-% des Mangans in der dreiwertigen Oxidationsstufe vorliegen, dadurch gekennzeichnet, daß 5 bis 60 Mol-% des in der dreiwertigen Oxidationsstufe vorliegenden Mangans durch eines oder mehrere der in der dreiwertigen Oxidationsstufe vorliegenden Elemente Aluminium, Gallium, Indium, Eisen, Chrom und SeltenerdeElemente ersetzt sind.

2. Nickel(ll)-hydroxid-Pulver gemäß Anspruch 1, dadurch gekennzeichnet, daß 10 bis 50 Mol-% des Mangans ersetzt sind.

3. Nickel(ll)-hydroxid-Pulver gemäß einem der Ansprüche 1 oder 2, dadurch gekennzeichnet, daß mindestens 80 Mol-% des Mangans in der dreiwertigen Oxidationsstufe vorliegen.

4. Nickel(ll)-hydroxid-Pulver gemäß einem der Ansprüche 1 bis 3, dadurch gekennzeichnet, daß mindestens 90 Mol-% des Mangans in der dreiwertigen Oxidationsstufe vorliegen.

5. Nickel(ll)-hydroxid-Pulver gemäß einem der Ansprüche 1 bis 4, dadurch gekennzeichnet, daß das Molverhältnis im Bereich von 5:1 bis 3:1 liegt.

6. Nickel(II)-hydroxid-Pulver gemäß einem der Ansprüche 1 bis 5, dadurch gekennzeichnet, daß es eines oder mehrere der in der zweiwertigen Oxidationsstufe vorliegenden Elemente aus der Gruppe Cd, Co, Zn, Ca und Mg in einer Höchstgesamtmenge von 8 Mol-%, bezogen auf die Gesamtmenge von Nickel und Mangan, aufweist.

7. Nickel(ll)-hydroxid-Pulver gemäß einem der Ansprüche 1 bis 6, dadurch gekennzeichnet, daß es eine Partikelgröße von 1 bis 100 µm aufweist.

8. Verfahren zur Herstellung Mangan(III)-haltiger Nickel(ll)-hydroxid-Pulver nach einem der Ansprüche 1 bis 7, dadurch gekennzeichnet, daß sie aus Lösungen von Nickel(II)-,Mangan(III)- und den in der dreiwertigen Oxidationsstufe vorliegenden Elementen mit Alkalilaugen kopräzipitiert werden.

9. Verfahren gemäß Anspruch 8, dadurch gekennzeichnet, daß die Mangan(III)-Salzlösung durch Vereinigung von Mangan(II)-Salzlösungen mit entsprechenden Mengen Permanganat-, Peroxodisulfat- oder H₂O₂-Lösung hergestellt wird.

10. Verfahren gemäß Anspruch 9, dadurch gekennzeichnet, daß die Mangan(II)-Salzlösung und/oder die Permanganat-Lösung Nickel(II)-Salze enthält.

11. Verfahren gemäß einem der Ansprüche 8 bis 10, dadurch gekennzeichnet, daß die Mangan(III)-Salzlösung stabilisierende Anionen enthält.

12. Verfahren gemäß einem der Ansprüche 8 bis 11, dadurch gekennzeichnet, daß die Kopräzipitation in Gegenwart von löslichen Salzen von in der zweiwertigen"Oxidationsstufe vorliegenden Elementen aus der Gruppe Co, Zn, Cd, Ca und Mg durchgeführt wird.

13. Verwendung von Nickel(II)-hydroxid-Pulvern gemäß einem der Ansprüche 1 bis 7 als Elektrodenmaterial in Sekundärbatterien.

## Claims

1. Manganese-containing nickel (II) hydroxide powders with a nickel to manganese molar ratio of 100:1 to 3:1, wherein at least 50 mole % of the manganese are present in the trivalent oxidation state,
characterised in that 5 to 60 mole % of the manganese present in the trivalent oxidation state are replaced by one or more of the elements aluminium, gallium, indium, iron, chromium and rare earth elements present in the trivalent oxidation state.

2. Nickel (II) hydroxide powders according to claim 1, characterised in that 10 to 50 mole % of the manganese are replaced.

3. Nickel (II) hydroxide powders according to one of claims 1 or 2, characterised in that at least 80 mole % of the manganese are present in the trivalent oxidation state.

4. Nickel (II) hydroxide powders according to one of claims 1 to 3, characterised in that at least 90 mole % of the manganese are present in the trivalent oxidation state.

5. Nickel (II) hydroxide powders according to one of claims 1 to 4, characterised in that the molar ratio is in the region of 5:1 to 3:1.

6. Nickel (II) hydroxide powder according to one of claims 1 to 5, characterised in that it has one or more of the elements of the group comprising Cd, Co, Zn, Ca and Mg present in the divalent oxidation state in a maximum total quantity of 8 mole %, based on the total quantity of nickel and manganese.

7. Nickel (II) hydroxide powder according to one of claims 1 to 6, characterised in that it has a particle size of 1 to 100 µm.

8. A process for the preparation of manganese (III)-containing nickel (II) hydroxide powders according to one of claims 1 to 7, characterised in that they are co-precipitated with alkali liquors from solutions of nickel (II), manganese (III) and the elements present in the trivalent oxidation state.

9. A process according to claim 8, characterised in that the manganese (III) salt solution is prepared by combining manganese (II) salt solutions with corresponding quantities of permanganate, peroxodisulfate or H₂O₂ solution.

10. A process according to claim 9, characterised in that the manganese (II) salt solution and/or the permanganate solution contains nickel (II) salts.

11. A process according to one of claims 8 to 10, characterised in that the manganese (III) salt solution contains stabilising anions.

12. A process according to one of claims 8 to 11, characterised in that co-precipitation is carried out in the presence of soluble salts of elements of the group comprising Co, Zn, Cd, Ca and Mg present in the divalent oxidation state.

13. The use of nickel (II) hydroxide powders according to one of claims 1 to 7 as electrode material in secondary batteries.

## Revendications

1. Poudre d'hydroxyde de nickel(II) contenant du manganèse, le rapport molaire du nickel au manganèse s'élevant de 100:1 à 3:1, dans laquelle au moins 50 moles % du manganèse sont présents dans le degré d'oxydation trivalent, caractérisée en ce qu'on remplace de 5 à 60 moles % du manganèse présent dans le degré d'oxydation trivalent par un ou plusieurs des éléments présents dans le degré d'oxydation trivalent, choisis parmi le groupe comprenant l'aluminium, le gallium, l'indium, le fer, le chrome et des éléments des terres rares.

2. Poudre d'hydroxyde de nickel(II) selon la revendication 1, caractérisée en ce que le manganèse a été remplacé à concurrence de 10 à 50 moles %.

3. Poudre d'hydroxyde de nickel(II) selon la revendication 1 ou 2, caractérisée en ce qu'au moins 80 moles % du manganèse se trouvent dans le degré d'oxydation trivalent.

4. Poudre d'hydroxyde de nickel(II) selon l'une quelconque des revendications 1 à 3, caractérisée en ce qu'au moins 90 moles % du manganèse se trouvent dans le degré d'oxydation trivalent.

5. Poudre d'hydroxyde de nickel(II) selon l'une quelconque des revendications 1 à 4, caractérisée en ce que le rapport molaire se situe dans le domaine de 5:1 à 3:1.

6. Poudre d'hydroxyde de nickel(II) selon l'une quelconque des revendications 1 à 5, caractérisée en ce qu'elle présente un ou plusieurs des éléments présents dans le degré d'oxydation bivalent, choisis parmi le groupe comprenant Cd, Co, Zn, Ca et Mg en une quantité totale maximale de 8 moles % rapportés à la quantité totale du nickel et du manganèse.

7. Poudre d'hydroxyde de nickel(II) selon l'une quelconque des revendications 1 à 6, caractérisée en ce qu'elle présente une granulométrie de 1 à 100 µm.

8. Procédé pour la préparation d'une poudre d'hydroxyde de nickel(II) contenant du manganèse(III) selon une quelconque des revendications 1 à 7, caractérisé en ce qu'on l'obtient par la coprécipitation de solutions de nickel(II), de manganèse(III) et des éléments présents dans le degré d'oxydation trivalent avec des alcalis.

9. Procédé selon la revendication 8, caractérisé en ce qu'on prépare la solution de sel de manganèse(III) par combinaison de solutions de sels de manganèse(II) avec des quantités correspondantes d'une solution de permanganate, d'une solution de peroxodisulfate ou d'une solution de H₂O₂.

10. Procédé selon la revendication 9, caractérisé en ce que la solution de sel de manganèse(II) et/ou la solution de permanganate contient des sels de nickel(II).

11. Procédé selon l'une quelconque des revendications 8 à 10, caractérisé en ce que la solution de sel de manganèse(III) contient des anions de stabilisation.

12. Procédé selon l'une quelconque des revendications 8 à 11, caractérisé en ce qu'on effectue la coprécipitation en présence de sels solubles d'éléments présents dans le degré d'oxydation bivalent, choisis parmi le groupe comprenant Co, Zn, Cd, Ca et Mg.

13. Utilisation de poudres d'hydroxyde de nickel(II) selon l'une quelconque des revendications 1 à 7, à titre de matière d'électrode dans des batteries secondaires.
